# EUROPÄISCHE PATENTSCHRIFT

(11) **EP 1 986 886 B1**
(45) Veröffentlichungstag und Bekanntmachung des Hinweises auf die Patenterteilung: **16.06.2010**
(21) Anmeldenummer: 07703533.5
(22) Anmeldetag: 21.02.2007
(51) Int. Cl.: B60R 11/02, B60R 7/06

(54) **GERÄTEHALTER ZUM EINBAU IN EIN KRAFTFAHRZEUG**
DEVICE HOLDER FOR FITTING IN A MOTOR VEHICLE
SUPPORT D'APPAREIL À MONTER DANS UN VEHICULE AUTOMOBILE

(30) Priorität: 23.02.2006 DE 102006008420
(43) Veröffentlichungstag der Anmeldung: 05.11.2008
(73) Patentinhaber: Leopold Kostal GmbH & Co. KG, 58507 Lüdenscheid (DE)
(72) Erfinder: WELSCHHOLZ, Jörg, 58849 Herscheid (DE); VOLMER, Werner, 58640 Iserlohn (DE)
(74) Vertreter: Kerkmann, Detlef
(86) Internationale Anmeldenummer: PCT/EP2007/001491
(87) Internationale Veröffentlichungsnummer: WO 2007/096143

(56) Entgegenhaltungen:
- EP-A1- 0 976 616
- DE-A1- 19 817 345
- DE-A1- 19 924 618
- US-A1- 2002 163 215
- US-A1- 2004 118 851

## Beschreibung

Die Erfindung betrifft einen Gerätehalter zum Einbau in ein Kraftfahrzeug für ein elektronisches Gerät, etwa ein Unterhaltungs-, Kommunikations-, Datenverarbeitungs- oder Informationsgerät.

In zunehmendem Maße werden in Kraftfahrzeugen mobile elektronische Geräte als Alternative zu herstellerseitig fest eingebauten Geräten eingesetzt. Bei diesen Geräten handelt es sich beispielsweise um Mobiltelefone, Navigationssysteme, Geräte zur Unterhaltung, Datenverarbeitungsgeräte oder dergleichen. Für einen Benutzer hat der Einsatz mobiler Geräte zum Vorteil, dass er ein und dasselbe Gerät, beispielsweise das Mobiltelefon oder das Navigationssystem sowohl innerhalb des Kraftfahrzeuges als auch außerhalb desselben nutzen kann. Des Weiteren bieten mobile Geräte den Vorteil, dass aufgrund des typischerweise sehr viel kürzeren Produktzyklusses bzw. der kürzeren Lebensdauer derartiger mobiler elektronischer Geräte verglichen mit dem Produktzyklus bzw. der Lebensdauer eines Kraftfahrzeuges ein mobiles, nicht mehr aktuelles oder nicht mehr dem gewünschten Stand der Technik entsprechendes Gerät durch ein neues bzw. aktuelles ersetzt werden kann, ohne dass hierzu aufwendige Aus- und Einbauarbeiten im Kraftfahrzeug notwendig sind. Zum Verwenden derartiger elektronischer Geräte in einem Kraftfahrzeug werden unterschiedliche Gerätehalter angeboten. Weit verbreitet sind Gerätehalter, die mittels eines Saugfußes an der Innenseite der Windschutzscheibe befestigt sind. Der eigentliche Gerätehalter mit seiner Aufnahme zum Einsetzen des Gerätes ist mit dem Saugfuß typischerweise über einen sogenannten Schwanenhals verbunden. Neben dieser mechanischen Verbindung zwischen dem Gerät und dem Kraftfahrzeug durch den Gerätehalter ist das Gerät mittels Kabelverbindungen an das Spannungsnetz des Kraftfahrzeuges und/oder an weitere Einrichtungen desselben angeschlossen, bei einem Mobiltelefon, beispielsweise an eine im Kraftfahrzeug installierte Freisprechanlage. Andere Gerätehalter sind konzipiert, um innerhalb der in den Fahrgastraum mündenden Belüftungsöffnungen verkrallt zu werden. Nachteilig bei diesem Gerätehalter ist; dass durch den Gerätehalter bzw. das in den Gerätehalter eingesetzte Gerät der Luftaustritt oftmals behindert ist. Auch bei diesem Gerätehaltern sind die Anschlusskabel freiliegend.

Auch wenn diese vorbekannten Gerätehalter die ihnen zugedachte Funktion, nämlich das Halten eines mobilen elektronischen Gerätes zu erfüllen vermögen, wird mitunter als nachteilig empfunden, dass es sich bei diesen für jedermann erkennbar um nachgerüstete Zubehörteile handelt und diese üblicherweise nicht in das Design des Fahrgastinnenraumes, insbesondere des Armaturenbrettes einpassen. Mitunter bereitet auch die Kabelführung von dem Gerät zu den kraftfahrzeugseitigen Anschlussstellen Schwierigkeiten; gegebenenfalls müssen diese Kabel am Gerätehalter und/oder am Armaturenbrett zusätzlich fixiert werden.

Um bei abgestelltem Kraftfahrzeug eine Begehrlichkeit Dritter an einem in dem Gerätehalter gehaltenen elektronischen Gerät nicht aufkommen zu lassen, werden diese Geräte zumeist mit dem jeweiligen Gerätehalter abgenommen und verstaut oder beim Verlassen des Kraftfahrzeuges mitgenommen. Allein das Entfernen des elektronischen Gerätes beim Verlassen des Kraftfahrzeuges wird häufig nicht als ausreichendes Einbruchshemmnis angesehen, da, wenn von außen erkennbar ein solcher Gerätehalter im Kraftfahrzeug montiert ist, oftmals angenommen wird, dass das von diesem gehaltene Gerät lediglich von dem Gerätehalter abgenommen worden ist und sich noch im Kraftfahrzeug, beispielsweise im Handschuhfach, befindet.

Ausgehend von diesem diskutierten Stand der Technik liegt der Erfindung daher die Aufgabe zugrunde, einen Gerätehalter für ein Kraftfahrzeug zum Aufnehmen eines elektronischen Gerätes vorzuschlagen, bei dem die zu dem vordiskutierten Stand der Technik aufgezeigten Nachteile vermieden sind.

Diese Aufgabe wird erfindungsgemäß durch einen eingangs genannten, gattungsgemäßen Gerätehalter gelöst, bei dem dieser Teil eines eine oberseitige Öffnung aufweisenden Faches ist, wobei der Gerätehalter gegenüber dem Fach zwischen einer Nicht-Gebrauchsstellung, in der der Gerätehalter in dem Fach aufgenommen ist, und einer Gebrauchsstellung, in der der Gerätehalter aus dem Fach heraus geschwenkt ist, verschwenkbar ist und dem Fach ein Verschluss zum Verschließen seiner Öffnung zugeordnet ist, wie im Dokument DE 198 17 345 A1 offenbart, wobei der Verschluss neben einer die Öffnung vollständig verschließenden Verschlussstellung in eine weitere Verschlussstellung bringbar ist, in der bei aus dem Fach ausgeschwenktem Gerätehalter die verbleibende Restöffnung zumindest weitestgehend verschlossen ist.

Dieser Gerätehalter ist Teil eines Faches, das typischerweise nach Art einer Ablage konzipiert ist. Das Fach kann bereits bei der Herstellung des Kraftfahrzeuges in das Kraftfahrzeug eingebaut sein oder nachträglich eingebaut werden. Im letzteren Fall kann eine hierzu vorgesehene Aufnahme in der Innenverkleidung des Kraftfahrzeuges bereits vorgesehen und durch einen Blindverschluss abgedeckt sein. Gemäß einem bevorzugten Ausführungsbeispiel befindet sich das Fach in der Oberseite des Armaturenbrettes. In diesem Fach ist der Gerätehalter verankert und gegenüber diesem verschwenkbar. Verschwenkbar ist der Gerätehalter aus einer innerhalb des Faches aufgenommenen Nicht-Gebrauchsstellung und einer gegenüber dieser Stellung aus dem Fach heraus geschwenkten Gebrauchsstellung. Das Fach zur Aufnahme des Gerätehalters ist so dimensioniert, dass dieses den Gerätehalter vorzugsweise zusammen mit einem von diesem gehaltenen elektronischen Gerät in der eingeschwenkten Nicht-Gebrauchsstellung aufnehmen kann. Das Fach verfügt über einen Verschluss zum Verschließen seiner oberseitigen Öffnung. Befindet sich der Gerätehalter bzw. das von diesem gehaltene Gerät in der eingeschwenkten Nicht-Gebrauchsstellung ist durch den Verschluss die Fachöffnung vollständig verschließbar. Bei geschlossenem Fach ist von außen nicht zu erkennen, ob es sich bei diesem Fach lediglich um eine Ablage oder eine Ablage mit einem integrierten Gerätehalter handelt. Neben dieser ersten Verschlussstellung kann der Verschluss in eine weitere Verschlussstellung gebracht werden. Diese weitere Verschlussstellung dient zum Verschließen der Fachöffnung, wenn sich der Gerätehalter in seiner aus dem Fach heraus geschwenkten Benutzungsstellung für das von diesem gehaltene Gerät befindet. In dieser weiteren Verschlussstellung ist die neben dem ausgeschwenkten Gerätehalter verbleibende Restöffnung des Faches durch den Verschluss zumindest weitestgehend verschlossen. Sämtliche weiteren, gegebenenfalls in dem Fach befindlichen Gegenstände bleiben sodann in dem Fach verschlossen.

Der Gerätehalter selbst trägt zweckmäßigerweise ein oder mehrere, beispielsweise als Steckkontakte ausgebildete elektrische/elektronische Schnittstellen zum Anschließen des in den Gerätehalter eingesetzten elektronischen Gerätes an die Spannungsversorgung und/oder an andere Systeme bzw. Netze des Kraftfahrzeuges. Da das Fach typischerweise in das Kraftfahrzeug eingebaut ist, verlaufen die elektrischen Anschlusskabel für einen Benutzer unsichtbar aus dem Fach heraus, beispielsweise unter die Verkleidung des Armaturenbrettes.

Das Fach zum Aufnehmen des Gerätehalters wird man typischerweise bezüglich seiner Breite größer konzipieren als die Breite des Gerätehalters. Dann dient das Fach nicht ausschließlich zum Aufnehmen eines elektronischen Gerätes, sondern kann zusätzlich auch als Ablage, beispielsweise für Brillen, Schlüssel oder dergleichen verwendet werden. Bei einer solchen Ausgestaltung wird man bestrebt sein, die bei ausgeschwenktem Gerätehalter verbleibende Öffnung des Faches vollständig zu verschließen. Gemäß einem ersten Ausführungsbeispiel verfügt zu diesem Zweck der Verschluss über zwei Verschlussfortsätze, die eine Aussparung einfassen. Die Verschlussfortsätze fassen seitlich den aus dem Fach ausgeschwenkten Gerätehalter ein und bedecken in der Verschlussstellung die zwischen dem Gerätehalter und den seitlichen Begrenzungen des Faches befindlichen Bereiche der Öffnung. Zum Verschließen dieser Bereiche der Fachöffnung ist gemäß einem weiteren Ausführungsbeispiel vorgesehen, dass an dem Gerätehalter selbst Verschlusselemente angeordnet sind, die in der ausgeschwenkten Stellung des Gerätehalters die sich zwischen dem Gerätehalter und den seitlichen Begrenzungen des Faches erstreckenden Bereiche der Fachöffnung bedecken. Der eigentliche Fachverschluss wird zum Verschließen der verbleibenden Fachöffnung an die Rückseite des Gerätehalters und den hinteren Abschluss dieser Verschlusselemente herangebracht.

Der Gerätehalter ist gemäß einer bevorzugten Ausgestaltung gegen die Kraft eines Rückstellelementes aus seiner aus dem Fach ausgeschwenkten Gebrauchsstellung in seine in dem Fach befindliche Nicht-Gebrauchsstellung bewegbar. Ein Ausschwenken des Gerätehalters zusammen mit dem darin gegebenenfalls aufgenommen Gerät erfolgt dann durch die in dem Rückstellelement gespeicherte Kraft. In der Nicht-Gebrauchsstellung ist der Gerätehalter zweckmäßigerweise arretiert gehalten. Zum Ausschwenken des Gerätehalters kann eine solche Arretierung durch eine manuelle Betätigung des Gerätehalters bzw. des von diesem gehaltenen Gerätes, etwa durch Herabdrücken desselben, gelöst werden, so dass dieser anschließend zweckmäßigerweise selbsttätig in seine Gebrauchsstellung ausschwenkt. Vorzugsweise steht die Arretierung mit dem Verschluss in einer Wirkverbindung, damit ein Ausschwenken des Gerätehalters aus seiner Nicht-Gebrauchsstellung in seine Gebrauchsstellung erst möglich ist, wenn sich der Verschluss in seiner Offenstellung befindet und somit die Fachöffnung vollständig geöffnet ist. Möglich ist es ebenfalls, die Ausschwenkbewegung des Gerätehalters an die Öffnungsbewegung des Verschlusses zu koppeln. Bei einer solchen Ausgestaltung wird durch die Bewegung des Verschlusses die Arretierung gelöst, so dass der Gerätehalter durch die Kraft eines Rückstellelementes selbsttätig aus dem geöffneten Fach ausschwenkt.

Der Verschluss des Faches kann unterschiedlich konzipiert sein. Möglich ist es, den Fachverschluss als Klappe, Schiebeklappe oder Schiebeverschluss zu konzipieren. Ferner kann der Verschluss aus mehreren einzelnen, gelenkig miteinander verbundenen Verschlusselementen aufgebaut sein. Bei einem solchen Verschluss handelt es sich um einen nach Art einer Jalousie konzipierten Verschluss. Gemäß einer weiteren Ausgestaltung besteht der Verschluss aus einzelnen gegeneinander verschiebbaren, lamellenartigen Verschlusselementen, die zum Öffnen des Faches und zum Verstellen desselben in seine beiden unterschiedlichen Verschlussstellungen gegeneinander, beispielsweise teleskopartig, verschiebbar sind.

Der Gerätehalter kann, wenn dieser sich in seiner ausgeschwenkten Stellung befindet, um eine quer zur Schwenkachse verlaufende Drehachse um einen begrenzten Winkelbetrag drehbar sein. Dies ermöglicht es, das Display des von dem Gerätehalter gehaltenen elektronischen Gerätes in Richtung zum Fahrer oder auch zum Beifahrer des Kraftfahrzeuges zu drehen. Grundsätzlich kann die Ausschwenkbewegung des Gerätehalters aus seiner in dem Fach aufgenommenen Nicht-Gebrauchsstellung in seine ausgeschwenkte Gebrauchsstellung mit einer Bewegungskomponente verbunden sein, damit sich der Gerätehalter und damit das Display eines elektronischen Gerätes zum Fahrer hin gedreht wird.

Die von einem solchen Gerätehalter getragenen elektronischen Geräte verfügen mehrheitlich über ein LCD-Display mit nur einer begrenzten Helligkeit. Daher kann es zweckmäßig sein, dem Gerätehalter eine Sonnenblende zuzuordnen, die das von dem Gerätehalter getragene Gerät, insbesondere sein Display, abschattet. Für den Fall, dass eine solche Sonnenblende nicht manuell aufsteckbar konzipiert sein soll, kann vorgesehen sein, diese klappbar auszugestalten, und zwar in einer Art und Weise, dass deren Aus- und Einklappbewegung in Wirkverbindung mit der Aus- und Einschwenkbewegung des Gerätehalters steht, so dass sich die Sonnenblende bei ausgeschwenktem Gerätehalter aufgeklappt in der gewünschten Abschattungsstellung befindet.

Nachfolgend ist die Erfindung anhand von Ausführungsbeispielen unter Bezugnahme auf die beigefügten Figuren beschrieben. Es zeigen:
- **Fig. 1:**: eine schematisierte perspektivische Ansicht eines in die Oberseite eines Armaturenbrettes eingelassenen Faches mit einem darin integrierten Gerätehalter,
- **Fig. 2:**: die Darstellung der Figur 1 mit geöffnetem Fach,
- **Fig. 3:**: die Darstellung der Figur 2 mit geöffnetem Fach und aus dem Fach ausgeschwenktem Gerätehalter,
- **Fig. 4:**: die Darstellung des Faches der Figur 3 mit einem in den ausgeschwenkten Gerätehalter eingesetzten elektronischen Gerät,
- **Fig. 5:**: die Darstellung des Faches mit dem ausgeschwenkten Gerätehalter der Figur 4 mit verschlossener Fachöffnung,
- **Fig. 6a - 6d:**: vergrößerte Detaildarstellungen des Faches mit ausgeschwenktem Gerätehalter,
- **Fig. 7a - 7d:**: schematisierte Darstellungen eines in die Oberseite eines Armaturenbrettes eingelassenen Faches mit einem darin integrierten Gerätehalter gemäß einem weitern Ausführungsbeispiel und
- **Fig. 8a - 8d:**: schematisierte Darstellungen eines in die Oberseite eines Armaturenbrettes eingelassenen Faches mit einem darin integrierten Gerätehalter gemäß noch einem weitern Ausführungsbeispiel.

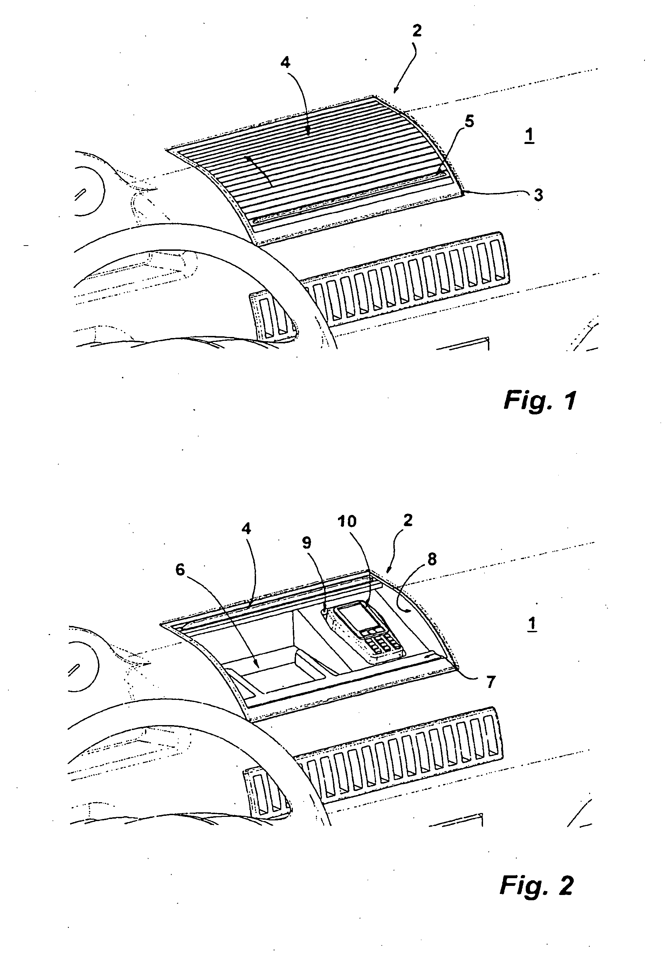

In die Oberseite eines Armaturenbrettes 1 eines Kraftfahrzeuges ist ein als Ablage konzipiertes Fach 2 eingebracht. Das Fach 2 folgt mit seinem oberen Abschluss der gekrümmten Formgebung des Armaturenbrettes 1. Das Fach 2 ist eingefasst vom einem Rahmen 3. Dem Fach 2 zugeordnet ist ein Verschluss 4, der bei dem dargestellten Ausführungsbeispiel ein Jalousieverschluss ist. Die einzelnen Elemente des Jalousieverschlusses 4 sind gelenkig miteinander verbunden und in nicht näher dargestellter Art und Weise in seitlichen Führungsschienen geführt. Eine Griffleiste 5 ragt von einem der vorderen Elemente des Verschlusses 4 ab. Zum Öffnen des Faches 2 wird der Verschluss 4 in Richtung zur Windschutzscheibe hin bewegt, wie dieses durch den Pfeil in Figur 1 angedeutet ist. Der Jalousieverschluss 4 wird bei dieser Bewegung in einen Staubereich hinter bzw. unterhalb des Faches 2 verschoben. Entsprechend gekrümmt sind die den Jalousieverschluss 4 führenden Führungsschienen.

Figur 2 zeigt das geöffnete Fach 2 mit dem in seine Offenstellung gebrachten Jalousieverschluss 4. In dem Fach 2 ist ein Gerätehalter 6 angeordnet, wobei der Gerätehalter 6 in seiner in Figur 2 gezeigten Stellung sich in seiner in dem Fach 2 aufgenommenen Nicht-Gebrauchsstellung befindet. Der Gerätehalter 6 ist mittels einer Leiste 7 schwenkbar an den beiden Seitenwänden 8 des Faches 2 angelenkt. Das in das Armaturenbrett 1 eingelassene Fach 2 dient des Weiteren als Ablage, wobei bei dem in den Figuren dargestellten Ausführungsbeispiel das Fach neben dem Gerätehalter 6 eine Aufnahme 9 zum Einlegen eines Mobiltelefons 10 aufweist.

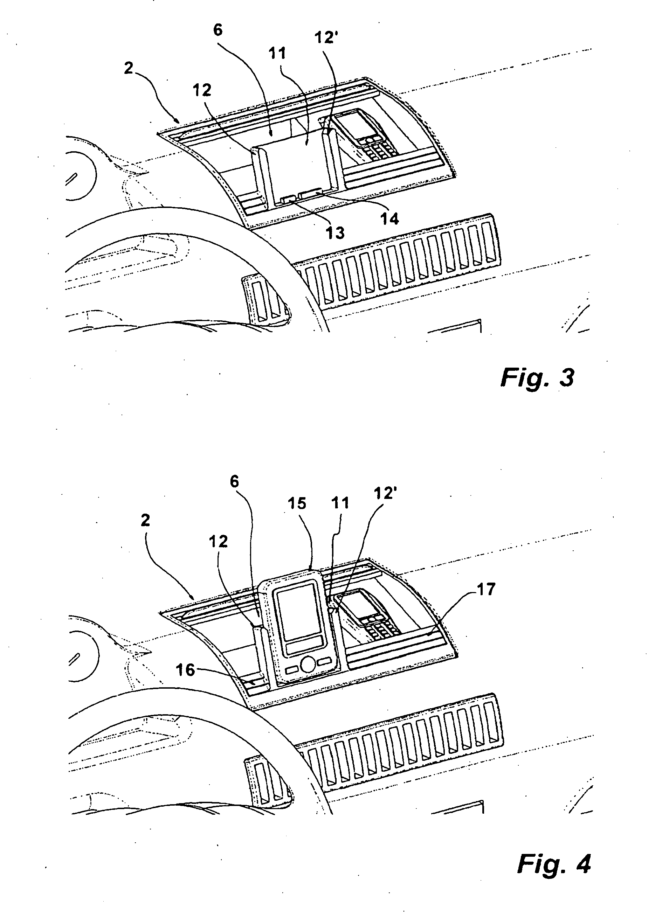

Der Gerätehalter 6 ist in Figur 3 in seiner ausgeschwenkten Gebrauchsstellung gezeigt. In dieser Stellung schlägt die Vorderseite der Leiste 7 an die Innenseite der vorderen Wand des Faches 2 an. Die Ausschwenkbewegung des Gerätehalters 6 erfolgt durch die Kraft eines in den Figuren nicht dargestellten Stellgliedes. Die zum Ausschwenken des Gerätehalters 6 benötigte Energie wird beim Einschwenken desselben in seine Nicht-Gebrauchsstellung in dem Stellglied gespeichert. Beispielsweise kann es sich bei einem solchen Stellglied um einen Gasdruckdämpfer handeln.

Der Gerätehalter 6 verfügt über eine Aufnahme 11, die durch zwei Seitenwangen 12, 12' in Richtung der Breite des Faches 2 begrenzt ist. Die Seitenwangen 12, 12' des Gerätehalters 6 sind konzipiert, um darin ein elektronisches Gerät zu halten und zu fixieren. Diese Halte- und Fixiermittel sind bei dem in den Figuren dargestellten Ausführungsbeispiel nicht gezeigt. Im Bereich des unteren Abschlusses der Aufnahme 11 des Gerätehalters 6 sind elektrische Steckverbinderanschlüsse 13, 14 angeordnet. Diese Steckverbinderanschlüsse 13, 14 dienen zum Kontaktieren des in die Aufnahme 11 des Gerätehalters 6 eingesetzten elektronischen Gerätes. Der Steckverbinderanschluss 13 dient beispielsweise einer Stromversorgung des elektronischen Gerätes; der Steckverbinderanschluss 14 dient zum Anschließen des elektronischen Gerätes an ein Bordinformationsnetz des Kraftfahrzeuges.

Als elektronisches Gerät zum Einsetzen in den Gerätehalter 6 dient bei dem dargestellten Ausführungsbeispiel beispielhaft ein mobiles Navigationsgerät 15, das in Figur 4 in die Aufnahme 11 des Gerätehalters 6 eingesetzt dargestellt ist. Durch die Steckverbinderanschlüsse 13, 14 ist das Navigationsgerät 15 sowohl an die Spannungsversorgung des Kraftfahrzeuges als auch den Daten-BUS angeschlossen. Hierüber empfängt das Navigationsgerät 15 kraftfahrzeugbezogene Daten, etwa die aktuelle Geschwindigkeit des Kraftfahrzeuges.

An den zu den beiden Seitenwänden 8 des Faches 2 weisenden Außenseiten der Seitenwangen 12, 12' des Geräteshalters 6 sind als Teil der Leiste 7 Verschlusselemente 16, 17 angeformt, deren oberseitiges Design das Design des Jalousieverschlusses nachbildet. Durch die Verschlusselemente 16, 17 sind diejenigen Bereiche der Öffnung des Faches 2 verschlossen, die sich zwischen dem eigentlichen Gerätehalter 6 und den Seitenwänden 8 des Faches 2 erstrecken. Der Gerätehalter 6 ist in seiner ausgeschwenkten Stellung fixiert, beispielsweise durch eine Arretierung, die etwa als Rastung ausgebildet sein kann. Die in Fahrtrichtung weisende Tiefe des Faches 2 ist ausreichend bemessen, damit in das Fach 2 der Gerätehalter 6 zusammen mit dem von diesem gehaltenen mobilen Navigationsgerät 15 eingeschwenkt werden kann.

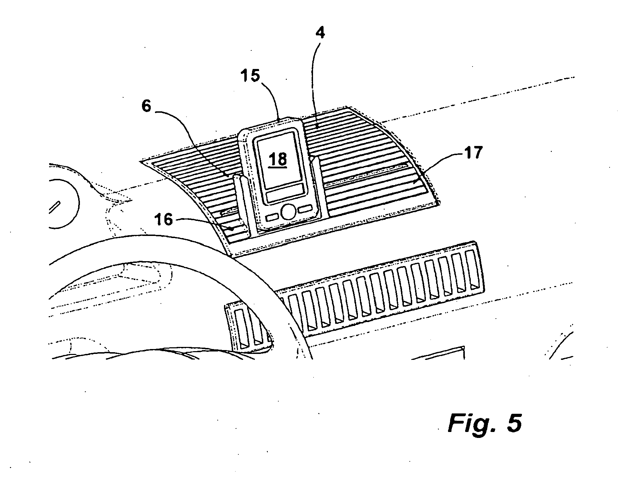

Der Jalousieverschluss 4 ist konzipiert, damit dieser neben seiner in Figur 1 gezeigten, das Fach 2 vollständig verschließenden Stellung, auch in eine Verschlussstellung gebracht werden kann, wie diese in Figur 5 wiedergegeben ist. Diese weitere Verschlussstellung zeichnet sich dadurch aus, dass der Jalousieverschluss 4 mit seiner Vorderseite an den hinteren Abschluss des Gerätehalters 6 sowie der beiden Verschlusselemente 16, 17 anstößt und in dieser Stellung fixiert ist. Das Fach 2 ist, wie aus Figur 5 ersichtlich, vollständig verschlossen, obwohl der Gerätehalter 6 sich in seiner aus dem Fach 2 herausgeschwenkten Gebrauchsstellung befindet. Eine Bedienung des Navigationsgerätes 15 ist ohne weiteres möglich. Insbesondere befindet sich dieses bei der vorgeschlagenen Anordnung des Faches in der Oberseite des Armaturenbrettes 1 im unmittelbaren Gesichtsfeld des Fahrers. Ein Fahrer hat daher die Möglichkeit, das Display 18 des Navigationsgerätes 15 zu betrachten, ohne seinen Blick über die Maßen von der Straße abwenden zu müssen.

Wird das Kraftfahrzeug abgestellt und soll das mobile Navigationsgerät 15 von außen nicht sichtbar sein, wird der Jalousieverschluss 4 des Faches 2 geöffnet, der Gerätehalter 6 zusammen mit dem mobilen Navigationsgerät 15 in das Fach 2 eingeschwenkt, bis der Gerätehalter in seine in Figur 2 gezeigte Stellung gebracht worden ist. Anschließend wird das Fach 2 durch Vorziehen des Jalousieverschlusses 4 verschlossen. Von außen erweckt das verschlossene Fach 2 den Eindruck, dass es sich um eine herkömmliche Ablage handelt.

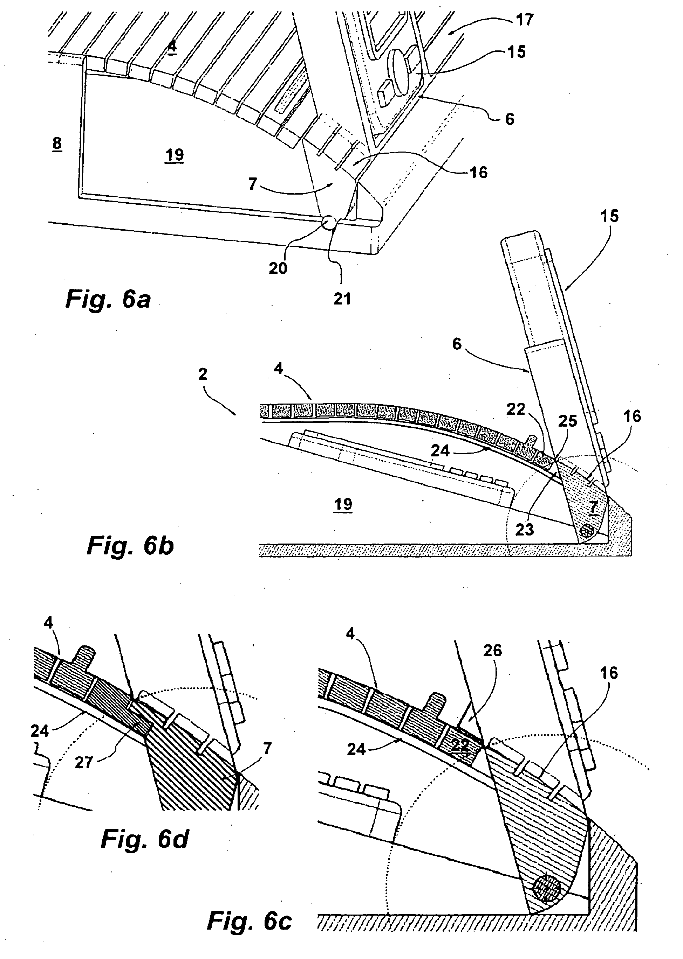

Der aus dem Fach 2 ausgeschwenkte Gerätehalter 6 mit dem von diesem gehaltenen Navigationsgerät 15 ist in vergrößerter Darstellung in den Figuren 6a, 6b dargestellt. Figur 6a stellt eine perspektivische An- und Einsicht in das Innere 19 des Faches 2 dar. Erkennbar ist die Ausbildung der schwenkbaren Lagerung der Leiste 7 in der Seitenwand 8, die zu diesem Zweck einen Lagerzapfen 20 trägt. Der Lagerzapfen 20 greift ein in eine Lagerbohrung 21 der Seitenwand 8. Erkennbar ist aus dieser Darstellung auch, dass die Verschlusselemente 16, 17 Teil der Leiste 7 sind. Der Jalousieverschluss 4 befindet sich in seiner die Restöffnung des Faches 2 verschließenden Stellung und ist bis an den rückseitigen Abschluss der Verschlusselemente 16, 17 sowie den Geräteträger 6 herangeführt. In dieser Stellung ist der Jalousieverschluss 4 arretiert.

Die Anordnung der Figur 6a des Gerätehalters 6 ist in Figur 6b in einem schematisierten Querschnitt gezeigt. In dieser Darstellung ist die Abstützanordnung des Gerätehalters 6 an dem ersten Element 22 des Verschlusses 4 sichtbar. In dieser Darstellung ist auch die der rechten Seitenwand 8 des Faches 2 zugeordnete Führung 23 des Verschlusses 4 sichtbar. Die Führung 23 verfügt über eine unterhalb des Verschlusses 4 befindliche Führungsleiste 24, auf deren Oberseite der Verschluss 4 aufliegt. In der aus dem Fach 2 ausgeschwenkten Stellung des Gerätehalters 6 stützt sich dieser mit seiner Rückseite an der vorderen Kante 25 des ersten Elementes 22 des Verschlusses 4 ab. Infolge der Fixierung des Verschlusses 4 in dieser, in den Figuren 5, 6a und 6b gezeigten Stellung bildet die Führungsleiste 24 ein Widerlager für den sich über das erste Jalousieelement 22 abstützenden Geräteträger 6. Infolge der winkligen Anordnung der Ebene des vorderen Endes des Verschlusses 4 gegenüber dem Geräteträger 6, wobei bei dem dargestellten Ausführungsbeispiel zwischen diesen beiden Elementen ein Winkel von etwa 45° eingeschlossen ist, braucht die Arretierung des Verschlusses 4 nur einem Teil der von dem Gerätehalter 6 ausgeübten und zu einer Öffnung des Verschlusses 4 führenden Kräften standzuhalten. Diese von dem Verschluss 4 bzw. der Führungsleiste 24 aufgefangenen Kräfte resultieren aus dem Gewicht des Gerätehalters 6 mit dem darin aufgenommenen Navigationsgerät 15. Diese erhöhen sich jedoch dann, wenn das Navigationsgerät 15 durch Tastenbetätigungen bedient wird.

In Figur 6c ist mit dem Bezugszeichen 26 eine Abstützleiste bezeichnet, die gemäß einem weiteren Ausführungsbeispiel an der Rückseite des Gerätehalters 6 angeformt sein kann. Die Abstützleiste 26 übergreift das erste Jalousieelement 22 in der in Figur 6c gezeigten geschlossenen Stellung des Jalousieverschlusses 4. Eine Krafteinleitung in das erste Jalousieelement 4 erfolgt dann etwa rechtwinklig zur Längserstreckung der Führungsleiste 24. Bei einer solchen Ausgestaltung benötigt der Jalousieverschluss 4 in seiner die Restöffnung des Faches 2 verschließenden Stellung, wie in Figur 6c gezeigt, grundsätzlich keine zusätzliche Arretierung. Derselbe Effekt lässt sich erreichen, wenn an dem ersten Jalousieelement 22 eine seine Vorderseite unterseitig fortsetzende Leiste 27 angeformt ist, die unter die Leiste 7 mit ihren Verschlusselementen 16, 17 in der in Figur 6b gezeigten Verschlussstellung des Jalousieverschlusses 4 greift. Diese Abstützanordnung ist in einer gegenüber der Figur 6b vergrößerten Darstellung in Figur 6d abgebildet.

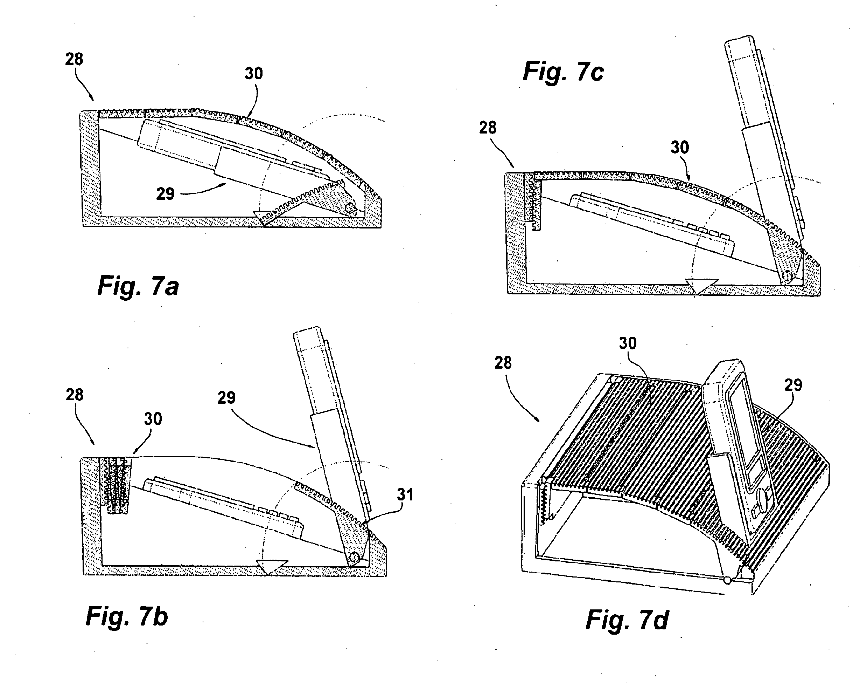

Figuren 7a bis 7d zeigen in einer weiteren Ausgestaltung ein in einem Fach 28 angeordneten, aus dem Fach aus- und einschwenkbaren Gerätehalter 29. Das Fach 28 ist mit seinem Gerätehalter 29 grundsätzlich ebenso aufgebaut wie das Fach 2 mit seinem Gerätehalter 6. Unterschiedlich ist bei dem in den Figuren 7a bis 7d gezeigten Ausführungsbeispiel die Konzeption des Verschlusses 30. Bei dem Verschluss 30 handelt es sich um einen Lamellenverschluss, dessen einzelne Lamellen zum Öffnen des geschlossenen Faches (vgl. Figur 7a) ineinander klappbar sind, wie dieses in Figur 7b, die den Verschluss 30 in seiner Offenstellung zeigt, erkennbar ist. Die an dem Gerätehalter 29 seitlich angeformten Verschlusselemente 31 weisen bei dem dargestellten Ausführungsbeispiel eine Länge in Bewegungsrichtung des Verschlusses 30 auf, die etwa der Länge von zwei einzelnen Lamellen des Verschlusses 30 entspricht. Figur 7c zeigt den Verschluss 30 in seiner weiteren, die Restöffnung des Faches 28 verschließenden Stellung mit ausgeschwenktem Gerätehalter 29. Aus dieser Darstellung ist erkennbar, dass zwei einzelne Lamellen in ihrer an der Rückwand des Faches 28 befindlichen Verstaustellung verbleiben und zum Verschließen der Restöffnung nicht benötigt werden. Figur 7d zeigt in einer schematisierten Seitenan- bzw. -einsicht das mit dem Verschluss 30 verschlossene Fach 28 mit dem ausgeschwenktem Gerätehalter 29.

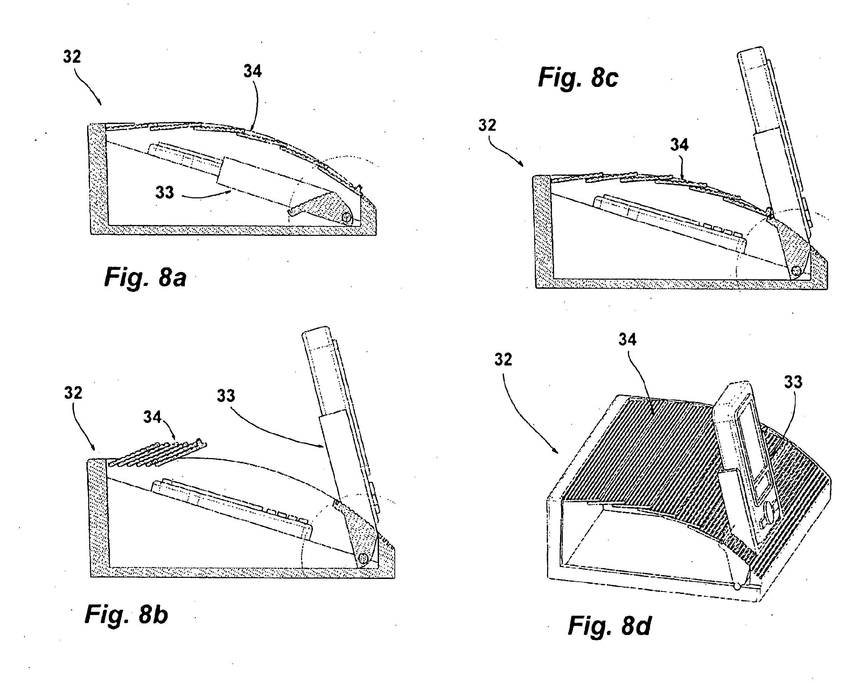

Figuren 8a bis 8d zeigen in noch einer weiteren Ausgestaltung ein in einem Fach 32 gehaltenen, aus- und einschwenkbaren Gerätehalter 33. Das in den Figuren 8a bis 8d gezeigte Ausführungsbeispiel entspricht demjenigen der Figuren 7a bis 7d mit dem Unterschied, dass die einzelnen Lamellen des Verschlusses 34 zum Öffnen des Faches 2 ineinander schiebbar sind.

Zum Verbessern der Krafteinleitung des ausgeschwenkten Gerätehalters bei dem in den Figuren 7a bis 7d sowie 8a bis 8d dargestellten Ausführungsbeispielen können Abstützanordnungen, wie zu dem Ausführungsbeispiel der Figuren 1 bis 6 dargestellt, vorgesehen sein.

Die in den Figuren dargestellten Gerätehalter können aus dem Fach ohne weiteres aus- und eingebaut werden. Dieses ermöglicht den Einsatz unterschiedlicher Gerätehalter in einem solchen Fach. Somit kann in das Fach jeweils der zu einem Gerät passende Gerätehalter eingesetzt werden. Zum erleichterten Einsetzen des Gerätehalters können die in die Seitenwände eingreifenden Lagerzapfen Stellschrägen aufweisen.

Des Weiteren ist in dem dargestellten Ausführungsbeispiel der Verlauf der elektrischen Verkabelung der gerätehalterseitigen Steckverbinder nicht dargestellt. Diese werden gemäß einem Ausführungsbeispiel an der Innenseite der Leiste gehalten und durch eine axiale Bohrung der Lagerzapfen aus dem Fach herausgeführt.

In noch einer Weiterbildung ist vorgesehen, dass ein solches Fach über zwei oder mehr Geräterhalter verfügt, die auch unabhängig voneinander ein- und ausschwenkbar gelagert sind.

### Bezugszeichenliste

- 1: Armaturenbrett
- 2: Fach
- 3: Rahmen
- 4: Verschluss
- 5: Griffleiste
- 6: Gerätehalter
- 7: Leiste
- 8: Seitenwand
- 9: Aufnahme
- 10: Mobiltelefon
- 11: Aufnahme
- 12, 12': Seitenwange
- 13: Steckverbinderanschluss
- 14: Steckverbinderanschluss
- 15: Mobiles Navigationsgerät
- 16: Verschlusselement
- 17: Verschlusselement
- 18: Display
- 19: Innere
- 20: Lagerzapfen
- 21: Lagerbohrung
- 22: erstes Element des Verschlusses
- 23: Führung
- 24: Führungsleiste
- 25: Kante
- 26: Abstützleiste
- 27: Leiste
- 28: Fach
- 29: Gerätehalter
- 30: Verschluss
- 31: Verschlusselement

- 32: Fach
- 33: Gerätehalter
- 34: Verschluss

## Patentansprüche

1. Gerätehalter zum Einbau in ein Kraftfahrzeug für ein elektronisches Gerät, etwa ein Unterhaltungs-, Kommunikations-, Datenverarbeitungs-, Informationsgerät oder dergleichen, wobei dieser Gerätehalter (6, 29, 33) Teil eines eine oberseitige Öffnung aufweisenden Faches (2, 28, 32) ist, wobei der Gerätehalter (6, 29, 33) gegenüber dem Fach (2, 28, 32) zwischen einer Nicht-Gebrauchsstellung, in der der Gerätehalter (6, 29, 33) in dem Fach (2, 28, 32) aufgenommen ist, und einer Gebrauchsstellung, in der der Gerätehalter (6, 29, 33) aus dem Fach (2, 28, 32) heraus geschwenkt ist, verschwenkbar ist und dem Fach (2, 28, 32) ein Verschluss (4, 30, 34) zum Verschließen seiner Öffnung zugeordnet ist, **dadurch gekennzeichnet daß** der Verschluss (4, 30, 34) neben einer die Öffnung vollständig verschließenden Verschlussstellung in eine weitere Verschlussstellung bringbar ist, in der bei aus dem Fach (2, 28, 32) ausgeschwenktem Gerätehalter (6, 29, 33) die verbleibende Restöffnung zumindest weitestgehend verschlossen ist.

2. Gerätehalter nach Anspruch 1, **dadurch gekennzeichnet, dass** die Breite des Gerätehalters kleiner ist als die Breite des Faches und dieser mit Abstand zu beiden Seitenbegrenzungen des Faches angeordnet ist und dass der Verschluss eine von zwei Verschlussfortsätzen eingefasste Aussparung aufweist, durch die der Gerätehalter in seiner ausgeschwenkten Stellung hindurch greift.

3. Gerätehalter nach Anspruch 1, **dadurch gekennzeichnet, dass** die Breite des Gerätehalters (6, 29, 33) kleiner ist als die Breite des Faches (2, 28, 32) und der Gerätehalter (6, 29, 33) mit Abstand zu den beiden Seitenbegrenzungen (8) des Faches (2, 28, 32) angeordnet ist und dass der Gerätehalter (6, 29, 33) als Teil desselben über zwei Verschlusselemente (16, 17; 31) verfügt, durch die in der aus dem Fach (2, 28, 32) ausgeschwenkten Stellung des Gerätehalters (6, 29, 33) die sich zwischen dem Gerätehalter (6, 29, 33) und der Seitenbegrenzung (8) des Faches (2, 28, 32) befindlichen Bereiche der Öffnung verschlossen sind.

4. Gerätehalter nach einem der Ansprüche 1 bis 3, **dadurch gekennzeichnet, dass** der Gerätehalter (6, 29, 33) aus seiner ausgeschwenkten Gebrauchsstellung in seine in dem Fach aufgenommene Nicht-Gebrauchsstellung gegen die Kraft eines Rückstellelementes bewegbar ist.

5. Gerätehalter nach einem der Ansprüche 1 bis 4, **dadurch gekennzeichnet, dass** der Gerätehalter (6, 29, 33) in seiner Nicht-Gebrauchsstellung arretiert gehalten ist und die Arretierung entriegelt ist, wenn der Verschluss (4, 30, 34) die Öffnung des Faches (2, 28, 32) vollständig freigibt.

6. Gerätehalter nach einem Ansprüche 1 bis 5, **dadurch gekennzeichnet, dass** der Verschluss (4, 30, 34) aus mehreren einzelnen, gelenkig miteinander verbundenen und/oder in Öffnungs- bzw. Schließrichtung gegeneinander verschiebbaren oder verstellbaren Verschlusselementen aufgebaut ist.

7. Gerätehalter nach einem der Ansprüche 1 bis 6, **dadurch gekennzeichnet, dass** der Gerätehalter (6, 29, 33) eine durch zwei Seitenwangen (12, 12') seitlich eingefasste Aufnahme (11) zur Aufnahme eines Unterhaltungs-, Kommunikations- oder Informationsgerätes (15) aufweist, wobei den Seitenwangen (12, 12') Elemente zum Fixieren des in die Aufnahme eingesetzten Gerätes (15) zugeordnet sind.

8. Gerätehalter nach einem der Ansprüche 1 bis 7, **dadurch gekennzeichnet, dass** der Gerätehalter um eine quer zu seiner Schwenkachse verlaufende Achse um einen begrenzten Winkelbetrag drehbar ist.

9. Gerätehalter nach einem der Ansprüche 1 bis 8, **dadurch gekennzeichnet, dass** der Gerätehalter eine aufklappbare Sonnenblende aufweist, deren Aus- und Einklappbewegung in Wirkverbindung mit der Aus- und Einschwenkbewegung des Gerätehalters steht.

10. Gerätehalter nach einem der Ansprüche 1 bis 9, **dadurch gekennzeichnet, dass** der Gerätehalter (6, 29, 33) ein oder mehrere elektrische/elektronische, als Steckverbindungselemente (13, 14) konzipierte Schnittstellen zum Anschließen des Gerätes (15) an das Spannungsnetz und/oder an ein oder mehrere Informations- und/oder Kommunikationssysteme des Kraftfahrzeuges umfasst.

## Claims

1. Apparatus holder to be built into a motor vehicle for an electronic apparatus, for instance an entertainment, communication, data processing, information or similar apparatus, this apparatus holder (6, 29, 33) being an element of a compartment (2, 28, 32) having an opening on its upper side, with the apparatus holder (6, 29, 33) capable of being swivelled in respect to the compartment (2, 28, 32) between a non-usage position in which the apparatus holder (6, 29, 33) is accommodated in the compartment (2, 28, 32), and a usage position in which the apparatus holder (6, 29, 33) is pivoted out of the compartment (2, 28, 32), and with a closure (4, 30, 34) allocated to the compartment (2, 28, 32) for the purpose of shutting its opening, **characterised in that**, in addition to a closure position which completely shuts the opening, the closure (4, 30, 34) can be brought into a further closure position in which the remaining residual opening is closed at least to a great extent when the apparatus holder (6, 29, 33) is swivelled out of the compartment (2, 28, 32).

2. Apparatus holder in accordance with Claim 1, **characterised in that** the width of the apparatus holder is smaller than the width of the compartment and this is arranged with a clearance to the two side boundaries of the compartment, and that the closure has a recess which is surrounded by two closure projections and through which the apparatus holder extends when in its swivelled-out position.

3. Apparatus holder in accordance with Claim 1, **characterised in that** the width of the apparatus holder (6, 29, 33) is smaller than the width of the compartment (2, 28, 32) and the apparatus holder (6, 29, 33) is arranged with a clearance to the two side boundaries (8) of the compartment (2, 28, 32) and that the apparatus holder (6, 29, 33) has two closure elements (16, 17; 31) as parts of itself by means of which the areas of the opening located between the apparatus holder (6, 29, 33) and the side boundary (8) of the compartment (2, 28, 32) are closed when the apparatus holder (6, 29, 33) is in its position swivelled out of the compartment (2, 28, 32).

4. Apparatus holder in accordance with any of Claims 1 to 3, **characterised in that** the apparatus holder (6, 29, 33) can be moved out of its swivelled-out usage position against the force of a restoring element into its non-usage position accommodated in the compartment.

5. Apparatus holder in accordance with any of Claims 1 to 4, **characterised in that** the apparatus holder (6, 29, 33) is held retained in its non-usage position and the retention is unlatched whenever the closure (4, 30, 34) completely uncovers the opening of the compartment (2, 28, 32).

6. Apparatus holder in accordance with any of Claims 1 to 5, **characterised in that** the closure (4, 30, 34) is constructed of several individual closure elements that are flexibly joined to each other and/or can be slid or moved towards each other in the direction of opening or closing, as the case may be.

7. Apparatus holder in accordance with any of Claims 1 to 6, **characterised in that** the apparatus holder (6, 29, 33) has a receptacle (11) which is laterally bordered by two side flanks (12, 12') for receiving an entertainment, communication or information apparatus (15), with elements for securing the apparatus (15) placed in the receptacle being allocated to the side flanks (12, 12').

8. Apparatus holder in accordance with any of Claims 1 to 7, **characterised in that** the apparatus holder can be rotated by a limited angular amount around an axis extending transversely to its swivel axis.

9. Apparatus holder in accordance with any of Claims 1 to 8, **characterised in that** the apparatus holder has a folding sun shield whose folding-out and folding-in motion is functionally interlinked to the swivelling-out and swivelling-in motion of the apparatus holder.

10. Apparatus holder in accordance with any of Claims 1 to 9, **characterised in that** the apparatus holder (6, 29, 33) encompasses one or more electrical / electronic interfaces designed as plug-type connector elements (13, 14) for the purpose of connecting the apparatus (15) to the voltage network and/or to one or more information and/or communication systems in the motor vehicle.

## Revendications

1. Support d'appareil, destiné à être monté dans un véhicule automobile pour un appareil électronique, tel qu'un appareil de divertissement, de communication, de traitement de données, d'information ou autre appareil analogue, ledit support d'appareil (6, 29, 33) étant constituant d'un compartiment (2, 28, 32), qui présente une ouverture sur le côté supérieur, ledit support d'appareil (6, 29, 33) pouvant être pivoté, par rapport au compartiment (2, 28, 32), entre une position de non-utilisation, dans laquelle le support d'appareil (6, 29, 33) est logé dans le compartiment (2, 28, 32), et une position d'utilisation, dans laquelle le support d'appareil (6, 29, 33) est pivoté hors du compartiment (2, 28, 32), et un dispositif de fermeture (4, 30, 34) étant associé au compartiment (2, 28, 32) pour fermer l'ouverture de celui-ci, **caractérisé en ce que** le dispositif de fermeture (4, 30, 34) peut être amené, non seulement dans une position de fermeture, dans laquelle l'ouverture est complètement fermée, mais aussi dans une autre position de fermeture, dans laquelle, le support d'appareil (6, 29, 33) étant pivoté hors du compartiment (2, 28, 32), l'ouverture restante est fermée sur sa plus grande étendue.

2. Support d'appareil selon la revendication 1, **caractérisé en ce que** la largeur du support d'appareil est inférieure à la largeur du compartiment et qu'il est disposé à distance des deux limitations latérales dudit compartiment, et que le dispositif de fermeture présente un évidement encadré de deux appendices de fermeture, à travers lequel le support d'appareil s'engage dans sa position de pivotement à l'extérieur.

3. Support d'appareil selon la revendication 1, **caractérisé en ce que** la largeur du support d'appareil (6, 29, 33) est inférieure à la largeur du compartiment (2, 28, 32) et que ledit support d'appareil (6, 29, 33) est disposé à distance des deux limitations latérales (8) dudit compartiment (2, 28, 32) et que le support d'appareil (6, 29, 33), dispose, en tant que constituants, d'éléments de fermeture (16, 17 ; 31), par lesquels, lorsque le support d'appareil (6, 29, 33) est dans sa position de pivotement hors du compartiment (2, 28, 32), les régions de l'ouverture, situées entre le support d'appareil (6, 29, 33) et les limitations latérales (8) dudit compartiment (2, 28, 32) sont fermées.

4. Support d'appareil selon l'une des revendications 1 à 3, **caractérisé en ce que** le support d'appareil (6, 29, 33) peut, à l'encontre de la force d'un élément de rappel, être déplacé de sa position d'utilisation, dans laquelle il est pivoté à l'extérieur, dans sa position de non-utilisation, dans laquelle il est logé dans le compartiment.

5. Support d'appareil selon l'une des revendications 1 à 4, **caractérisé en ce que** le support d'appareil (6, 29, 33), dans sa position de non utilisation, est maintenu bloqué, et que le blocage est déverrouillé quand le dispositif de fermeture (4, 30, 34) libère complètement l'ouverture du compartiment (2, 28, 32).

6. Support d'appareil selon l'une des revendications 1 à 5, **caractérisé en ce que** le dispositif de fermeture (4, 30, 34) est constitué par plusieurs éléments de fermeture individuels, articulés, reliés ensemble et / ou pouvant être déplacés ou ajustés, les uns par rapport aux autres, dans la direction d'ouverture ou de fermeture.

7. Support d'appareil selon l'une des revendications 1 à 6, **caractérisé en ce que** le support d'appareil (6, 29, 33) présente un réceptacle (11), encadrée de deux joues latérales (12, 12'), pour la réception d'un appareil de divertissement, de communication ou d'information (15), des éléments étant associés aux joues latérales (12, 12') pour la fixation de l'appareil (15), logé dans le réceptacle.

8. Support d'appareil selon l'une des revendications 1 à 7, **caractérisé en ce que** le support d'appareil peut tourner sur un angle limité, autour d'un axe s'étendant perpendiculairement à son axe de pivotement.

9. Support d'appareil selon l'une des revendications 1 à 8, **caractérisée en ce que** le support d'appareil présente un parasol rabattable, dont le mouvement de relèvement et d'abaissement est en relation avec le mouvement de pivotement d'extraction et d'insertion du support d'appareil.

10. Support d'appareil selon l'une des revendications 1 à 9, **caractérisé en ce que** le support d'appareil (6, 29, 33) comprend une ou plusieurs interfaces électriques / électroniques, conçues en tant qu'éléments de connexion mâles-femelles (13, 14), pour le raccordement de l'appareil (15) au réseau de tension et / ou à un ou plusieurs systèmes d'information et / ou de communication du véhicule automobile.
